# EUROPEAN PATENT SPECIFICATION

(11) **EP 2 656 815 B1**
(45) Date of publication and mention of the grant of the patent: **25.10.2017**
(21) Application number: 13177600.7
(22) Date of filing: 18.12.2009
(51) Int. Cl.: A61C 17/22, A46B 15/00

(54) **Oral care implement having multiple soft tissue cleaner components**
Mundpflegegerät mit mehreren Komponenten zur Reinigung von Weichgewebe
Accessoire de soin buccal comprenant de multiples composants de nettoyage de tissus mous

(43) Date of publication of application: 30.10.2013
(62) Divisional of application: 09801618.1
(73) Proprietor: Colgate-Palmolive Company, New York, NY 10022 (US)
(72) Inventor: Jimenez, Eduardo, Manalapan, NJ 07726 (US); Rooney, Michael, Millburn, NJ 07041 (US); Moskovich, Robert, East Brunswick, NJ 08816 (US); Pringiers, Jacob, 5 Colombo (LK); Casini, Luca, 20124 Milano (IT); Storz, Joachim, 5700 Zell Am See (AT); Klausegger, Raimund, 1070 Vienna (AT)
(74) Representative: Thum, Bernhard

(56) References cited:
- WO-A1-2006/055572
- WO-A1-2008/103597
- WO-A1-2009/136912
- DE-A1-102006 025 825
- DE-U1-202005 009 026
- US-A1- 2006 195 995

## Description

### Field of the Invention

The present invention relates generally to ansate oral care implements, and specifically to an oral care implement, such as a toothbrush, with multiple cleaners for treating soft oral tissues.

### Background of the Invention

According to the American Dental Association, a major source of bad breath in healthy people is microbial deposits on the tongue, where a bacterial coating harbors organisms and debris that contribute to bad breath. The tongue is a haven for the growth of microorganisms since the papillary nature of the tongue surface creates a unique ecological site that provides an extremely large surface area, favoring the accumulation of oral bacteria. Anaerobic flora and bacteria residing on the tongue play an important role in the development of chronic bad breath commonly called halitosis. In general, the bacteria produce volatile sulfur compounds (VSC). If there is enough buildup of the sulfur compounds, the result can be bad breath or oral malodor.

While bladed tongue scrapers have been used in the past, these scrapers are inadequate in respect to their effectiveness on the soft tissue surface of the tongue. Broad flat scraping blades are limited in their ability to reach between the papillae where the bacteria and microdebris have collected. Moreover, notwithstanding the benefits to be gained by any ability to clean the tongue, some users avoid the use of such blades because of lack of comfort on the tongue surface.

Recently, substantial efforts have been expended to develop oral care implements having improved soft tissue cleaners. An example of such an oral care implement has a tissue cleaner in the form of a pad composed of an elastomeric material. The pad is disposed on the head on a surface opposite the tooth cleaning elements. The pad includes a plurality of conically shaped nubs extending therefrom for cleaning between the papillae of the tongue. While this oral care implement provides a substantial improvement over the then existing tongue cleaners, it is somewhat limited in that the pad of elastomeric material is provided on only one major surface of the head. Therefore, the soft tissue pad cannot reach into tight spaces and recesses within the oral cavity.

A further improvement of oral care implements incorporating soft tissue cleansing technology has a head having a single elastomeric soft tissue cleaner applied to the major rear surface of the head that also extends along the side walls of the head. This arrangement allows the soft tissue cleaners to act on the user's gums during brushing.

A limiting factor in versatility of the soft tissue cleaner on the head of oral care implements, thus far, has been the inability to cost-effectively manufacture isolated multiple components on the head. This is in part due to the parametric requirements of existing injection molding equipment and processes.

Despite the aforementioned and other improvements, a need still exists for an oral care implement with a soft tissue cleaner that can provide effective removal of bacteria from the tongue and other oral soft tissue regions while maintaining comfort to the user.

DE 10 2006 025 825 A1 discloses an oral care implement, comprising different kinds of cleaners on the rear surface of the head.

US 2006/0195995 A1 discloses an oral care implement comprising ridges, conical projections and bristles. The bristles are located on the front surface, while the ridges and conical projections are located on the rear surface of the tooth brush head. The ridges may be made of polypropylene or of thermoplastic elastomer.

DE 20 2005 009 026 U discloses a soft tissue cleanser having nubs, fins and longitudinal lamella. The nubs may be made of a soft plastic, such as thermoplastic elastomer, while the fins are made of a hard plastic, such as polypropylene.

### Summary of the Invention

The invention pertains to an oral care implement with a tissue cleaner that provides improved cleaning and effective removal of bacteria and microdebris disposed on oral tissue surfaces. The invention is an oral care implement comprising multiple types of soft tissue cleaners that offer expanded cleaning and/or in-mouth sensations during an oral care session. An oral care implement according to the invention is defined in claim 1. The dependent claims set out further preferred embodiments of the oral care implement according to the invention.

In an example useful for understanding the invention, an oral care implement comprises a handle; a head connected to the handle, the head having a first surface, an opposite second surface, and a peripheral surface extending between the first and second surfaces; a first cleaner for cleansing soft oral tissue, the first cleaner formed of a resilient material and fixed to the head; and a second cleaner for cleansing soft oral tissue, the second cleaner formed of a resilient material and fixed to the head. In one embodiment, a third cleaner can be included that is formed of a resilient material and fixed to the head

The first and second (and possibly third) cleaners are constructed of resilient material having different densities, hardness, colors and/or materials that cause different trigeminal sensory responses in the user, by incorporating, for example, different flavoring agents and/or sensates. In still another preferred embodiment, the first and second (and possibly third) cleaners are fixed to and cover different zones of the head. In this embodiment, it is further preferred that the first and second (and possibly third) cleaners comprise different topographies. The first and second (and possibly third) cleaners may be molded to the head separately. One or more of the aforementioned preferred characteristics may be combined in certain embodiments of the invention.

In an example useful for understanding the invention, an oral care implement comprises a handle; a head connected to the handle, the head having a structural body having a front surface and a rear surface opposite the front surface; a basin formed into the rear surface of the structural body, the structural body comprising a protuberance extending upward from a recessed floor of the annular basin, the basin surrounding the protuberance; a first cleaner formed of a resilient material for cleansing soft oral tissue located within the basin, the protuberance of the structural body extending through a central hole of the first cleaner; and a second cleaner formed of a resilient material for cleansing soft oral tissue, the second cleaner located on the protuberance of the structural body.

In an example useful for understanding the invention, an oral care implement comprises a handle; a head connected to the handle, the head having a first surface, an opposite second surface, and a peripheral surface extending between the first and second surfaces; a first cleaner formed of a resilient material for cleansing soft oral tissue, the first cleaner being a pad having a hole that is fixed to the first surface of the head; a second cleaner formed of a resilient material for cleansing soft oral tissue, the second cleaner being an elongated strip fixed to the head along the peripheral surface of the head; and a third cleaner formed of a resilient material for cleansing soft oral tissue, the third cleaner being a structure that is fixed to a portion of the first surface of the head that is exposed through the central hole of the first cleaner.

In an example useful for understanding the invention, an apparatus for cleansing soft oral tissue comprises: a plurality of elastomeric rings arranged in an aligned and separated manner along an axis; and for each pair of adjacent elastomeric rings, an elastomeric wall extending along the axis and connecting the adjacent elastomeric rings.
In a further aspect, the invention can be a method of manufacturing a head of an oral care implement comprising: a) forming a structural body of the head out of a hard plastic, the main structural body having a front surface, a rear surface, a basin formed into the rear surface, and a protuberance extending upward from a recessed floor of the basin, the basin surrounding the protuberance; b) injecting a first shot of thermoplastic elastomer via a first port into the basin of the structural body of the head to form a first cleaner for cleansing soft oral tissue; and c) injecting a second shot of a thermoplastic elastomer via a second port onto the protuberance of the structural body of the head to form a second cleaner for cleansing soft oral tissue.

### Brief Description of the Drawings

This invention is capable of use in a broad array of oral care implements and hygiene products. The drawings illustrate one use of the invention and are not to be construed as the only embodiment of the invention.
Figure 1 is a rear perspective view of an ansate oral care implement according to one embodiment of the present invention.
Figure 2 is a close-up view of the head of the ansate oral care implement of Figure 1.
Figure 3 is a top view of the head of the ansate oral care implement of Figure 1.
Figure 4 is a left-side view of the head of the ansate oral care implement of Figure 1.
Figure 5 is a right-side view of the head of the ansate oral care implement of Figure 1.
Figure 6 is a rear view of the head of the ansate oral care implement of Figure 1.
Figure 7 is a lateral cross-sectional view of the head of the ansate oral care implement of Figure 1 along view VII-VII of Figure 6.
Figure 8 is a longitudinal cross-sectional view of the head of the ansate oral care implement of Figure 1 along view VIII-VIII of Figure 6.
Figure 9 is a perspective view of a soft tissue cleaner according to an embodiment of the present invention.

### Detailed Description of the Drawings

In the following description, the invention is discussed in terms of a manual toothbrush. However, in other forms, the invention could be in the form of other oral care implements including a soft-tissue cleansing implement, a powered toothbrush, or other ansate implements designed for oral care.

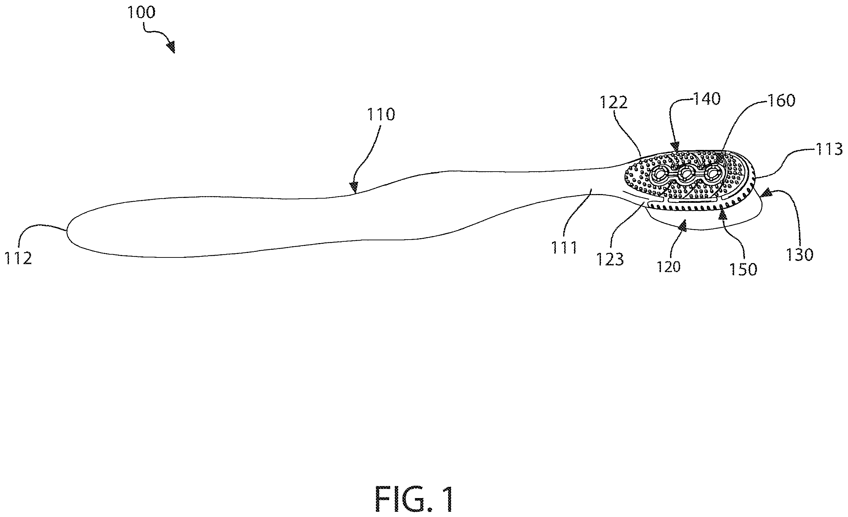

Referring first to Figure 1, a toothbrush **100** is illustrated according to one embodiment of the present invention. The toothbrush **100** generally comprises a handle **110** and a head **120.** The handle **110** provides the user with a mechanism by which he/she can readily grip and manipulate the toothbrush **100.** The handle **110** is generically illustrated and may be formed of many different shapes, sizes, materials and by a variety of manufacturing methods that are well-known to those skilled in the art. For example, the handle **110** can be constructed of elastomers, polypropylene, SAN, ABS, or even paper products such as a typical lollipop stick. If desired, the handle **110** may include a suitable textured grip (not shown) made of a thermoplastic elastomer or can be a multipart construction. Stated simply, the details of the handle **110** are not limiting of the present invention and, thus, require no further discussion for purposes of the present invention.

The toothbrush **100** extends from a proximal end **112** to a distal end **113.** The head **120** is operably connected to a distal end of the handle **110.** Generally, the head **110** and the handle **120** of the toothbrush are preferably formed as a single unitary structure using a molding, milling, machining or other suitable process. However, in other embodiments, the handle **110** and head **120** may be formed as separate components which are operably connected at a later stage of the manufacturing process by any suitable technique known in the art, including without limitation thermal welding, a tight-fit assembly, a coupling sleeve, adhesion, or fasteners. Whether the head **120** and handle **110** are of a unitary or multi-piece construction (including connection techniques) is not limiting of the present invention.

It should be noted at this time that relative terms such as distal, middle, proximal, upper, lower, top, bottom, left, right etc. are merely used to delineate relative positions of the components of the toothbrush **100** with respect to one another and are not intended to be in any further way limiting of the present invention.

The head **120** generally comprises a front surface **121,** a rear surface **122** and a peripheral surface **123.** The peripheral surface **123** connects the front and rear surfaces **121, 122.** The front surface **121,** the rear surface **122** and the peripheral surface **123** of the head **120** can take on a wide variety of shapes and contours, none of which are limiting of the present invention. For example, the surfaces can be planar, contoured or combinations thereof. Furthermore, while the head **120** is normally widened relative to the neck **111** of the handle **110,** it could in some constructions simply be a continuous extension or narrowing of the handle **110.**

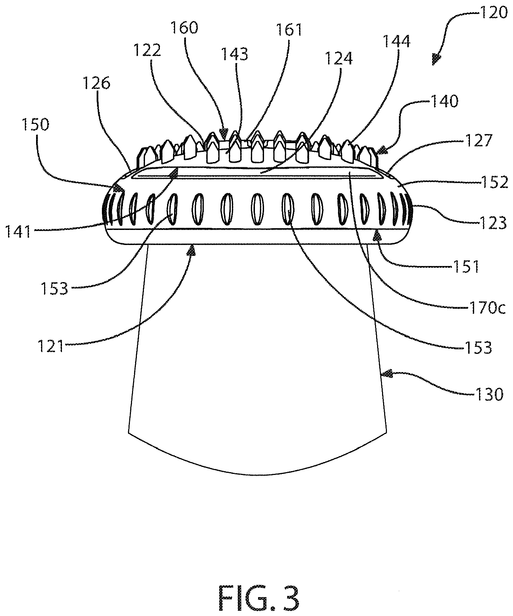

The front surface **121** (best visible in FIG. 3) comprises a collection of cleaning elements **130** extending therefrom for cleaning contact with an oral surface. While the collection of cleaning elements **130** is particularly suited for brushing teeth, the collection of cleaning elements **130** can also be used to clean oral soft tissue, such as a tongue, gums, or cheeks instead of or in addition to teeth. As used herein, the term "cleaning element" is used in a generic sense to refer to any structure that can be used to clean or massage an oral surface through relative surface contact. Common examples of "cleaning elements" include, without limitation, filament bristles, fiber bristles, nylon bristles, spiral bristles, rubber bristles, elastomeric protrusions, flexible polymer protrusions, combinations thereof and/or structures containing such materials or combinations. The focus of the present invention is on the arrangement of the soft tissue cleaner (which in the illustrated embodiment includes three components **140, 150, 160**) on head **120** of the toothbrush **100.** Thus, the collection **130** of tooth cleaning elements on the front surface **121** of the head are illustrated generically with the understanding that any desired configuration can be incorporated into the toothbrush **100.**

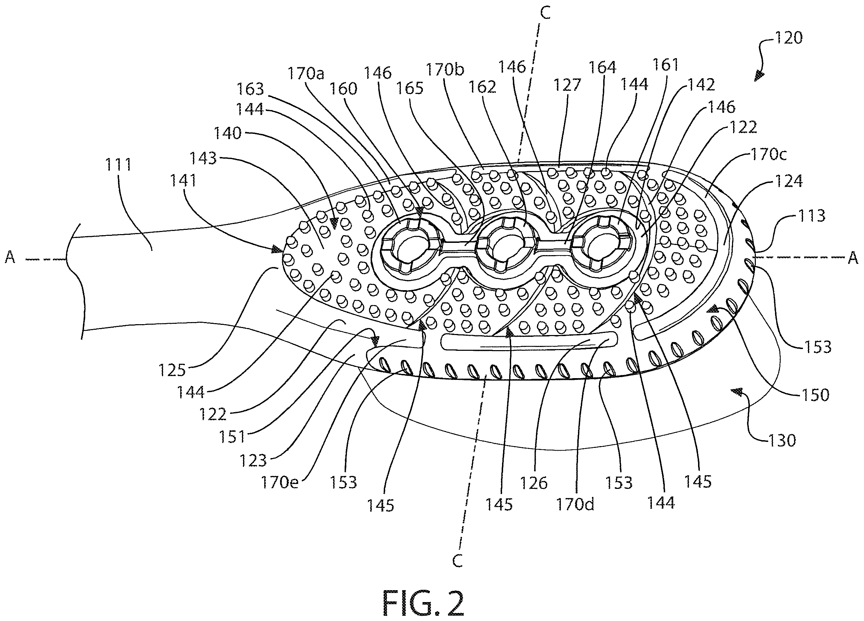

Referring now to FIG. 2, a close-up view of the head **120** of the toothbrush **100** is illustrated. The head **120** generally comprises a first soft tissue cleaner **140,** a second soft tissue cleaner **160** and a third soft tissue cleaner **150.** The soft tissue cleaners **140, 150, 160** are preferably constructed of a biocompatible resilient material suitable for uses in an oral hygiene apparatus, such as a thermoplastic elastomer. As an example, one preferred elastomeric material is styrene-ethylene/butylene-styrene block copolymer (SEBS) manufactured by GLS Corporation. Nevertheless, SEBS material from other manufacturers or other materials. The soft tissue cleaners **140, 150, 160** are constructed of different types of resilient materials or the same resilient material with different densities. The soft tissue cleaners 140, 150, 160 can be constructed of resilient materials with one or more different characteristics such as color, hardness, flavor, and/or sensate.

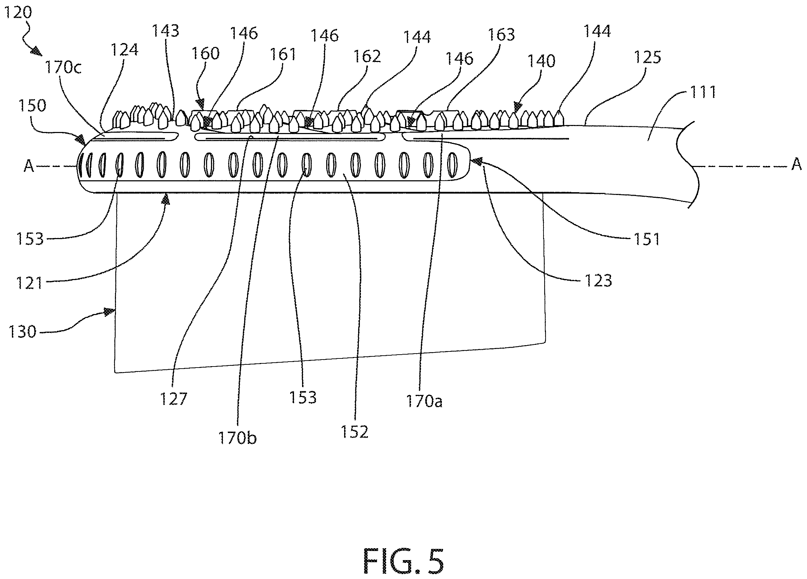

With reference to FIGS. 2, 5 and 6 concurrently, the details of the soft tissue cleaner **140** will now be discussed. The first soft tissue cleaner **140** is in the form of a pad **141** that is fixed to the rear surface **122** of the head **120** of the toothbrush **100.** The pad **141** is preferably molded directly to the head **120** but can be molded separately and later fixed to the head **120** if desired, for example by an adhesive or sonic welding. The pad **141** extends from a distal end **124** of the head **120** to a proximal end **125** of the head **120** and covers substantially the entire width of the head **120,** extending from the first lateral edge **126** of the head to the second lateral edge **127** of the head **120.**

The pad **141** has a central hole **142** extending therethrough. As a result, the pad **141** takes on an annular shape. In the illustrated embodiment, the central hole **142** is an elongated shape comprising three overlapping and aligned circular portions. The central hole **142** is preferably shaped to generally correspond to the shape of the second soft tissue cleaner **160.** The invention, however, is not so limited. Moreover, while a single hole **142** is illustrated in the pad **141** in other embodiments, a plurality of separate and distinct holes could be provided in the pad **141,** wherein each one of the holes may accommodate a separate second soft tissue cleansing structure **160.**

The pad **141** includes an exposed top surface **143.** A plurality of projections **144,** in the form of nubs, project upward from the top surface **143** of the pad **141.** Only a few of the nubs **144** are numerically identified in the figures in order to avoid clutter. As used herein a "nub" is generally meant to include a column-like protrusion (without limitation to the cross-sectional shape of the protrusion) which is upstanding from a base surface. In a general sense, the nub, in the preferred construction, has a height that is greater than the width at the base of the nub (as measured in the longest direction). Nevertheless, nubs could include projections wherein the widths and heights are roughly the same or wherein the heights are somewhat smaller than the base widths. Moreover, in some circumstances (e.g., where the nub tapers to a tip or includes a base portion that narrows to a smaller projection), the base width can be substantially larger than the height.

The nubs **144** are designed to engage the oral soft tissue to significantly reduce a major source of bad breath in people and improve hygiene. The nubs **144** enable removal of microflora and other debris from the tongue and other soft tissue surfaces within the mouth. The tongue, in particular, is prone to develop bacterial coatings that are known to harbor organisms and debris that can contribute to bad breath. This microflora can be found in the recesses between the papillae on most of the tongue's upper surface as well as along other soft tissue surfaces in the mouth. When engaged or otherwise pulled against a tongue surface, for example, the nubs **144** of the first elastomeric tissue cleaner **140** provide for gentle engagement with the soft tissue while reaching downward into the recesses of adjacent papillae of the tongue. The elastomeric construction of the first soft tissue cleaner **140** also enables the top surface **143** of the pad **141** to follow the natural contours of the oral tissue surfaces, such as the tongue, cheeks, lips, and gums of a user. Moreover, the soft nubs **144** are able to flex as needed to traverse and clean the soft tissue surfaces in the mouth along which it is moved.

In the illustrated embodiment, the nubs **144** are preferably conically shaped. As used herein, "conically shaped" or "conical" is meant to include true cones, frusto-conically shaped elements, and other shapes that taper to a narrow end and thereby resemble a cone irrespective of whether they are uniform, continuous in their taper, or have rounded cross-sections. The base portion of each conically shaped nub **144** is larger than the corresponding tip portion.

The pad **141** of the first soft tissue cleaner **140** further comprises a plurality of arcuate ridges **145** formed into the top surface **143.** The arcuate ridges **145** are spaced apart from one another in a substantially parallel arrangement along the longitudinal axis **A-A** of the head. The arcuate ridges **145** extend the entirety of the lateral width of the pad **141,** thereby essentially extending form the first lateral edge **126** of the head **120** to the second lateral edge **127** of the head **120.** Preferably, the arcuate ridges **145** have a concave side facing the proximal edge **125** of the head **120.**

The arcuate ridges **145** are formed by inclined walls **146.** The inclined walls **146** preferably extend outward from head **120** in an inclined manner away from the proximal edge **125** of the head **120** and toward the distal end **124** of the head **120.** The arcuate ridges **145** are configured to direct fluid in contact with the head **120** toward the lateral edges **126, 127** of the head **120** when the implement **100** is moved across a soft oral tissue. While the structures **145** are described as ridges, they can alternatively be designed and/or considered as arcuate channels. Moreover, while the ridges **145** are illustrated as being arcuate in nature, they take on other shapes and forms, such as linear. In the illustrated embodiment, two of the arcuate ridges **145** are interrupted by the protuberance **180** of the head **120.**

The nubs **144** and the ridges **145** collectively form the topography of the first soft tissue cleaner **140.** Of course, the topography of the first soft tissue cleaner **140** can take on other forms and structures. It is preferred, however, that the topography of the first soft tissue cleaner **140** be different than the topography of the second and/or third soft tissue cleaners **150, 160.**

The exact range of density and/or hardness of the elastomeric material of the first soft tissue cleaner **140** is not limiting of the present invention. In some embodiments, however, the first soft tissue cleaner 140 may be designed to have a different density and/or hardness than the matrials of the second and/or third soft tissue cleaners 160, 150. In the present invention, however, the first cleaner 140 and the second cleaner 160 have a different hardness.

Furthermore, the resilient material of the first soft tissue cleaner **140** may also be imbued with a sensory material, which can be any suitable biocompatible medication or chemical for oral use. The sensory material is released inside the mouth, lips, or cheeks by way of several methods, including but not limited to abrasion, a temperature change, a change in pH or dissolution. In one embodiment, the sensory material is a sensate that provides a biochemical sensory response to the inside tissue and surfaces of the mouth. Such a sensory response is understood to result from stimulation of the trigeminal nerve of a human. A sensate generally produces a physiological effect without a taste, with such effect usually represented by the terms cooling, tingle, and hot (or heat). Sensates are usually derived from single compounds that are not volatile and that do not have a smell or taste per se. As one example, a chemical known as capsaicin, found naturally in chile peppers, can be used to provide a tingle, a hot or warm massage, or a heating or warm, soothing sensation to a user. Capsaicin is also known to provide pain relief and numbing sensations when topically applied. Some examples of sensates that produce cooling sensations include (-)-menthol and camphor. Most of the polyols, including maltitol syrup, sorbitol, mannitol, erythritol, isomalt and xylitol, also provide a cooling sensation. The coolest of the polyols, erythritol, provides a distinct cooling sensation. Both erythritol and xylitol cool the mouth and fight the sensation of dry mouth commonly associated with prescription drugs and dental hygiene products. Erythritol is a naturally occurring four-carbon structure. Xylitol is a five-carbon sugar found in fruits and vegetables and made in small amounts by the human system as a metabolic intermediate.

In another embodiment, the sensory material is provided as flavoring agent for causing an olfactory sensory response in a human. A flavor agent is commonly understood to include a mixture of compounds that are volatile and produce an aromatic effect and that stimulate the olfactory bulb. Flavors are generally transmitted through the nasal passages, and are often selected and used for their unique association with certain consumer benefits, such as lavender for stress relief or relaxation. Another flavor example is chamomile, which has a strong, aromatic smell and is often used medicinally against sore stomach and as a relaxant to help you fall asleep. Chamomile is also used as a mouthwash against oral mucositis (the swelling, irritation, and ulceration of the mucosal cells that line the digestive tract).

In one embodiment, the first soft tissue cleaner **140** can be imbued with both a sensate component and a flavor component. While the exact sensory material of the elastomeric material of the first soft tissue cleaner **140** is not limiting of the present invention, it is preferred that the first soft tissue cleaner **140** be imbued with a different sensory material than the second and/or third soft tissue cleaners **150, 160.**

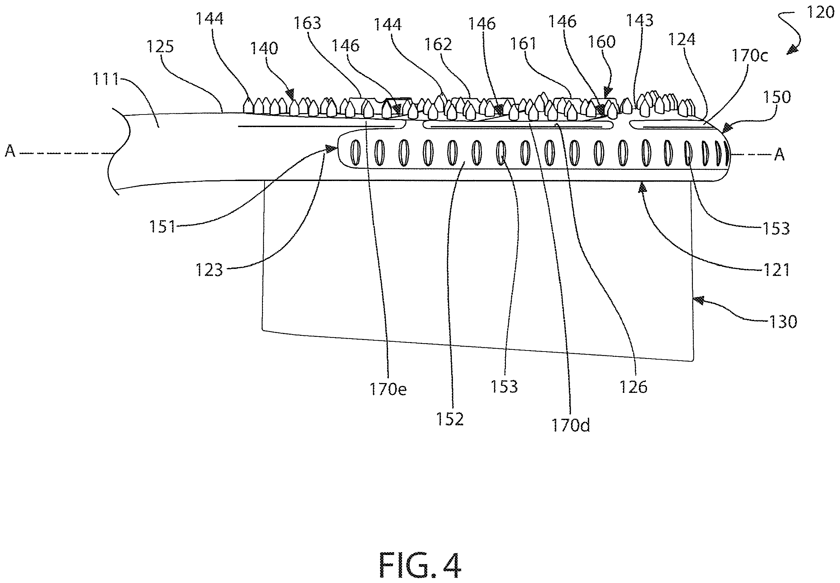

Referring now to FIGS. 3-6 concurrently, the details of the third soft tissue cleaner **150** will now be discussed. The third soft tissue cleaner **150** is in the form of an elongated strip **151** that is fixed to the peripheral surface **123** of the head **120** of the toothbrush **100.** The elongated strip **151** is preferably molded directly to the head **120** but can be molded separately and later fixed to the head **120** if desired. The strip **151** extends about a substantial entirety of the peripheral surface **123** of the head **120.** More specifically, the elongate strip **151** extends along the peripheral surface **123** of the head **120** so as to cover the first lateral edge **126,** the distal lateral edge **124** and the second distal edge **127** of the head **120.**

The elongated strip **151** includes an exposed surface **152.** A plurality of channels/grooves **153** are formed into the elongated strip. The grooves **153** are transverse to the axis of the elongated strip **151** and arranged in a spaced-apart manner. Only a few of the grooves **153** are numerically identified in the figures in order to avoid clutter. The grooves **153** form a topography on the surface **152** of the elongated strip of alternating ridges and grooves, which act as massaging microflaps when used.

The third soft tissue cleaner **150** is designed to engage and massage the oral soft tissue to significantly reduce a major source of bad breath in people and improve hygiene (explained in detail above with respect to the first soft tissue cleaner **140**). Locating the third soft tissue cleaner **150** on the peripheral surface **153** of the head **120** provides a narrow structure that can be used to reach narrow recesses that the large surface area of the first soft tissue cleaner **140** can not. Moreover, during a normal brushing of teeth, the third soft tissue cleaner **150** will contact the hard to reach crevices between the cheeks and gums.

The grooves **153** (and resulting intermittent ridges) collectively form the topography of the third soft tissue cleaner **150.** Of course, the topography of the third soft tissue cleaner **150** can take on other forms and structures. It is preferred, however, that the topography of the third soft tissue cleaner **150** be different than the topography of the first and/or second soft tissue cleaners **140, 160.**

The third soft tissue cleaner **150** can be molded to the head **120** (more specifically, the preformed structural body **120A**) either in the same shot or separately than the first soft tissue cleaner **140** during an injection molding process.

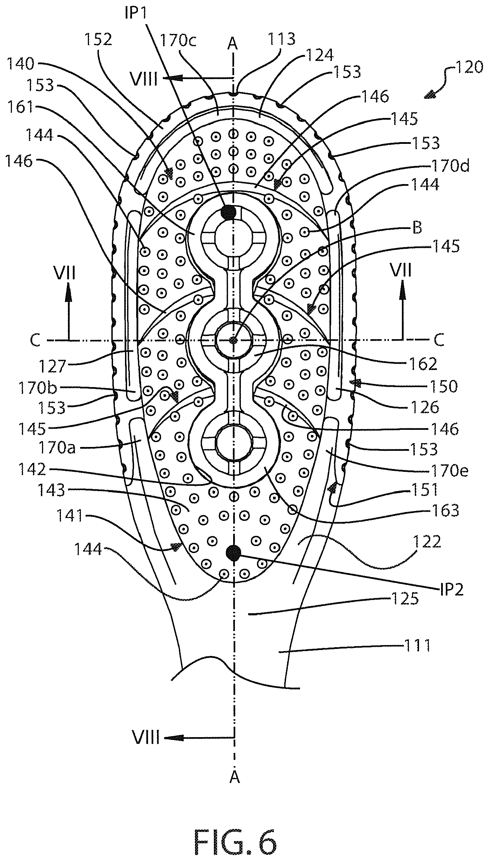

As is best visible in FIGS. 2 and 6, the first soft tissue cleaner **140** and the third soft tissue cleaner **150** are separated by a wall **170** (comprising sections **170a-e**) of the structural body **120A** (which is constructed of a hard plastic such as SAN or PP) of the head **120.** The wall **170** forms a separation barrier between the first soft tissue cleaner **140** and the third soft tissue cleaner **150.** In the illustrated embodiment, the sections **170a-e** of the wall **170** are separated by gaps/grooves that are filled with the resilient material of the first and/or third soft tissue cleaner **140,150.** Of course, in other embodiments, the wall **170** may be a continuous structure that completely isolates the first soft tissue cleaner **140** from the third soft tissue cleaner **150.**

The exact range of density and/or hardness of the elastomeric material of the third soft tissue cleaner **150** is not limiting of the present invention. The third soft tissue cleaner **150** has a different density than the first and second soft tissure cleaners **140, 160.** The third soft tissue cleaner **150** may be of a different hardness than the first and/or second soft tissue cleaners **140,160** in some embodiments. In other embodiments, the third soft tissue cleaner **150** may be of the same hardness as the first and/or second soft tissue cleaners **140, 160**

Furthermore, as discussed above with respect to the first soft tissue cleaner **140,** the resilient material of the third soft tissue cleaner **150** may also be imbued with a sensory material. While the exact sensory material of the elastomeric material of the third soft tissue cleaner **150** is not limiting of the present invention, it is preferred that the third soft tissue cleaner **150** be imbued with a different sensory material than the first and/or second soft tissue cleaners **140, 160.**

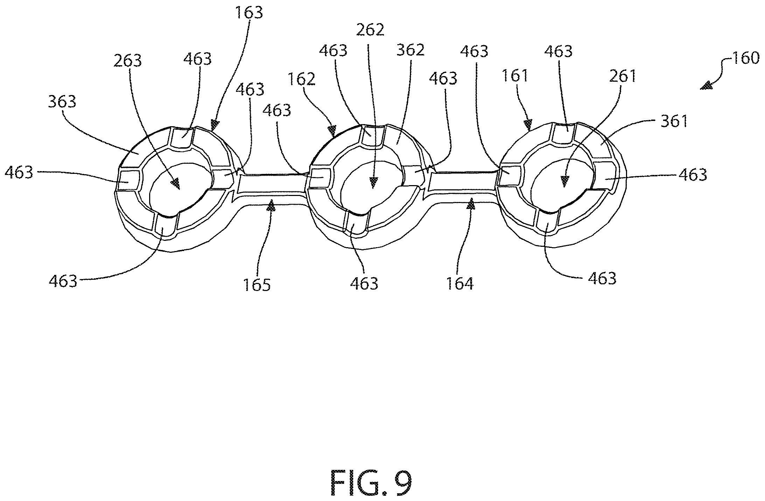

Referring now to FIGS. 2, 6 and 9 concurrently, the details of the second soft tissue cleaner **160** and its arrangement on the head **120** will now be discussed. The second soft tissue cleaner **160** is an elastomeric structure comprising three rings **161-163** connected by linear walls **164-165.** Of course, more or less rings can be used for the second soft tissue cleaner **160** as desired.

The three rings **161-163** are wall-like structures that form central cavities **261-263** respectively. The three rings **161-163** terminate in top surfaces **361-363** respectively. Each of the rings **361-363** have a plurality of grooves **463** formed into the top surfaces **361-363** in a circumferentially spaced manner.

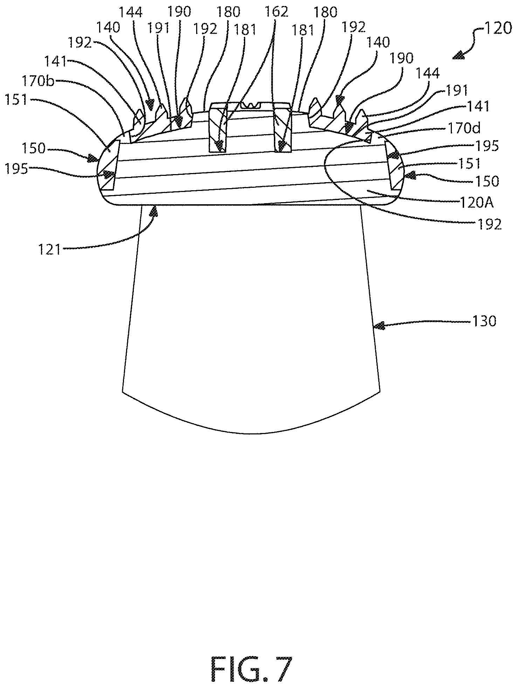

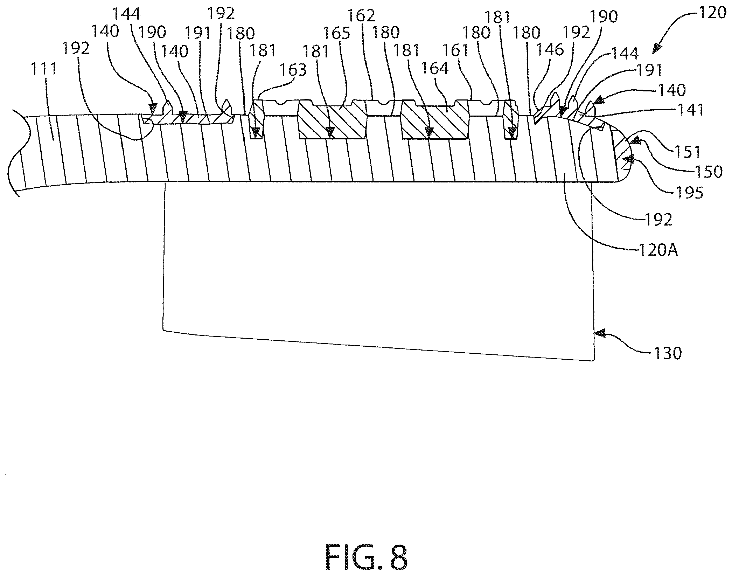

The second soft tissue cleaner **160** is fixed to the rear surface **122** of the head **120** of the toothbrush **100** so that the rings **161-163** are aligned with the longitudinal axis **A-A** of the head **120.** The second soft tissue cleaner **160** is positioned on that portion of the rear surface **122** of the head **120** that is exposed through the central hole **142** of the first soft tissue cleaner **140.** As is best visible in FIGS. 7-8, the second soft tissue cleaner **160** is fixed to a protuberance **180** of the hard plastic (such as SANS or PP) of which the structural body **120A** of the head **120** is formed that extends through the central hole **142.**

Most preferably, the second soft tissue cleaner **160** is positioned within the central hole **142** (and atop the protuberance **180**) so that it is spaced and isolated from the first soft tissue cleaner **140.** The second soft tissue cleaner **160** is preferably molded directly to the head **120** but can be molded separately and later fixed to the head **120** if desired. It is also preferred that the second soft tissue cleaner **160** be molded to the head **120** in a second shot separate than the first and third soft tissue cleaners **140, 150.**

The second soft tissue cleaner **160** is designed to engage and massage the oral soft tissue to significantly reduce a major source of bad breath in people and improve hygiene (explained in detail above with respect to the first soft tissue cleaner **140**). The second soft tissue cleaner **160** is designed and arranged to work in combination with the first soft tissue cleaner **140** during an oral care session to effectively clean a soft tissue surface, especially tongue. More specifically, the second soft tissue cleaner **160** is specifically designed so that the top surfaces **361-363** of the rings **161-163** are at least flush with (and preferably higher) than the tops of the tallest nubs **144** of the first soft tissue cleaner **140.** It also preferable that the second soft tissue cleaner **160** be constructed of an elastomeric material that is of a different type than that of the first soft tissue cleaner **140.** The second soft tissue cleaner **160** has a different density than that of the first soft tissue cleaner **140.** The second soft tissue cleaner **140** may have a different color, flavor, sensate and/or hardness, than that of the first soft tissue cleaner. Thus, during movement of the head **120** across the tongue (or other oral surface) the softer first soft tissue cleaner **140** can bend and reach into the recesses between the papillae of the tongue's upper surface and loosen particles while the more rigid second soft tissue cleaner **160** can sweep the particles away and/or finalize the dislodging process.

The rings **161-163** and walls **164-165** collectively form the topography of the second soft tissue cleaner **160.** Of course, the topography of the second soft tissue cleaner **160** can take on other forms and structures. It is preferred, however, that the topography of the second soft tissue cleaner **160** be different than the topography of the first and/or third soft tissue cleaners **140,150.** The second soft tissue cleaner **160** protrudes from the top surface of the protuberance **180.**

Furthermore, as discussed above with respect to the first soft tissue cleaner **140,** the resilient material of the second soft tissue cleaner **160** may also be imbued with a sensory material. While the exact sensory material of the elastomeric material of the third soft tissue cleaner **160** is not limiting of the present invention, the second soft tissue cleaner **160** may be imbued with a different sensory material than the first and/or third soft tissue cleaners **140, 150.**

Referring now to FIGS. 7-8 concurrently, the structural details of the connection and arrangement of the cleaners **140, 150, 160** to the structural body **120A** of the head **120** will be discussed in greater detail. The rear surface **122** of the structural body **120A** of the head **120** comprises a basin **190** formed therein for receiving the first soft tissue cleaner **140.** The basin **190** is defined by a recessed floor **191** and upstanding side walls **192.** The basin **190** corresponds in size and shape to the first soft tissue cleaner **140** so as to effectuate nesting of the first soft tissue cleaner **140** therein. In the illustrated embodiment, the basin **190** is an annular basin resulting in a protuberance **180** extending centrally upward from a central portion of the floor **191** of the basin **190.** As a result, the basin **190** circumferentially surrounds the protuberance **180.** The protuberance **180** is an integrally formed extension of the main structural body **120A** of the head **120** and corresponds to the size and shape of the central hole **142** of the first soft tissue cleaner **140.** The protuberance **180** extends through the central hole **142** of the first soft tissue cleaner **140.**

The third soft tissue cleaner **160** is fixed to a top surface of the protuberance **180** and separated from the first soft tissue cleaner **140.** In other words, the second soft tissue cleaner **160** is an isolated structure that does not come into contact with the first soft tissue cleaner **140.** The second soft tissue cleaner **160** nests within channels **181** formed within the top surface of the protuberance **180.** The second soft tissue cleaner **160** is preferably as tall as or extends above the tallest of the nubs **144** of the first soft tissue cleaner **140.**

A peripheral channel **195** is also formed into the peripheral surface **123** of the structural body **120A** of the head **120.** The peripheral channel **195** extends along the lateral surface of the head **120** between the front surface **121** and the rear surface **122.** The second soft tissue cleaner **150** nests within the channel **195.** A plurality of grooves/gaps are also provided in the rear surface **122** of the structural body **120A** that extend between (and connect) the peripheral channel **195** and the basin **190.** These grooves (which are in essence gaps between the wall sections **170a-e**) make it possible to form the first and third soft tissue cleaners **140, 150** with a single shot of thermoplastic elastomer during the injection molding process.

Referring now to FIGS. 6-8 concurrently, one preferred embodiment of manufacturing the head **120** via an injection molding process will be described. First, the structural head **120A** of the head **120** is formed by injecting a liquefied hard plastic, such as PP or SAN, into a mold having the appropriately shaped fill cavity. Once the structural body **120A** is sufficiently cooled (the structure of which is described above), an outer mold is placed about the structural body **120A** for forming the first and third soft thermoplastic elastomer into the basin **190** at point **IP2** via a first port. The first type of liquefied thermoplastic elastomer fills the basin **190** and flows into the peripheral channel **195** (via the gaps/grooves between the wall sections **170a-e**), thereby filling the peripheral channel **195.** As a result, the first and third soft tissue cleaners **140,150** are formed as illustrated. Of course, the first and third soft tissue cleaners **140, 150** can be formed with separate shots in other embodiments. The second soft tissue cleaner **160** is formed by injecting a second shot of a second type of liquefied thermoplastic elastomer at point **IP1** via a second port. The two ports are both positioned above the head and therefore, the ports are sized so that both can inject separately onto the head. The second port allows the second soft tissue cleaner **160** to be formed on the protuberance **180** in an isolated and spaced manner form the first soft tissue cleaner **140.** This allows the first and second soft tissue cleaners **140,160** to be formed of different types of elastomers. For example, the first and second soft tissue cleaners **140, 160** can have different colors, flavors, sensates or material properties, such as hardness or density.

While a number of embodiments of the current invention have been described and illustrated in detail, various alternatives and modifications will become readily apparent to those skilled in the art without departing from the scope of the invention. As various changes could be made in the above methods, compositions and structures without departing from the scope of the invention, it is intended that all matter contained in this application, including all mechanisms and/or modes of interaction described above, shall be interpreted as illustrative only and not limiting in any way the scope of the appended claims.

## Claims

1. An oral care implement (100) comprising:
a handle (110);
a head (120) connected to the handle (110), the head (120) having a front surface (121), a rear surface (122), and a peripheral surface (123) extending between the front and rear surfaces;
cleaning elements (130) extending from the front surface of the head;
a first cleaner (140) for cleansing soft oral tissue fixed to the rear surface of the head (120);
a second cleaner (160) for cleansing soft oral tissue fixed to the rear surface of the head (120); and
a third cleaner (150) for cleansing soft oral tissue fixed to the peripheral surface of the head (120);
**characterized in that** the first cleaner (140) is constructed of a resilient elastomeric material having a first density, the second cleaner (160) is constructed of a resilient elastomeric material having a second density, and the third cleaner (150) is constructed of a resilient elastomeric material having a third density, wherein the first cleaner (140) and the second cleaner (160) have a different hardness.

2. The oral care cleaning implement (100) of claim 1 wherein the first cleaner (140) and the second cleaner (160) are injection molded and are a first shot of resilient material and the third cleaner (150) is injection molded and is a second shot of resilient material.

3. The oral care cleaning implement (100) of claim 1 wherein the first cleaner (140) is constructed of a resilient material imbued with a sensory material to cause a first trigeminal sensory response, wherein the second cleaner (160) is constructed of a resilient material imbued with a sensory material to cause a second trigeminal sensory response, and wherein the third cleaner (150) is constructed of a resilient material imbued with a sensory material to cause a third trigeminal sensory response.

4. The oral care cleaning implement (100) of claim 3 wherein the first cleaner (140) is constructed of a resilient material having a first flavoring agent, wherein the second cleaner (160) is constructed of a resilient material having a second flavoring agent, and wherein the third cleaner (150) is constructed of a resilient material having a third flavoring agent.

5. The oral care cleaning implement (100) of claim 3 wherein the first cleaner (140) is constructed of a resilient material having a first sensate, wherein the second cleaner (160) is constructed of a resilient material having a second sensate, and wherein the third cleaner (150) is constructed of a resilient material having a third sensate.

6. The oral care implement (100) of claim 1 further comprising:
the first cleaner (140) fixed to a first zone of the head (120);
the second cleaner (160) fixed to a second zone of the head (120); and
the third cleaner (150) fixed to a third zone of the head (120).

7. The oral care implement (100) of claim 6 wherein the first cleaner (140) comprises a first topography adapted to clean soft oral tissue, wherein the second cleaner (160) comprises a second topography adapted to clean soft oral tissue, and wherein the third cleaner (150) comprises a third topography adapted to clean soft oral tissue, wherein the first topography comprises a plurality of nub protuberances (144), wherein the third topography comprises a plurality of grooves (153), and the second topography comprises a plurality of ring-like walls (161, 162, 163).

8. The oral care implement (100) of claim 7 wherein the first zone is an annular area on the first surface (122) of the head (120), the annular area surrounding a central zone, wherein the third zone is a strip (151) extending along the peripheral surface (123) of the head (120), and wherein the second zone is the central zone (142).

9. The oral care implement (100) of claim 1 further comprising a plurality of teeth cleaning elements (130) extending from the opposite surface of the head.

## Patentansprüche

1. Mundpflegegerät (100), umfassend:
einen Griff (110);
einen Kopf (120), der mit dem Griff (110) verbunden ist, wobei der Kopf (120) eine vordere Fläche (121), eine hintere Fläche (122), und eine Umfangsfläche (123), die sich zwischen der vorderen Fläche und der hinteren Fläche erstreckt aufweist;
Reinigungselemente (130), die sich von der vorderen Fläche des Kopfs erstrecken;
einen ersten Reiniger (140) zum Reinigen von oralem Weichgewebe, der an der hinteren Fläche des Kopfs (120) befestigt ist;
einen zweiten Reiniger (160) zum Reinigen von oralem Weichgewebe, der an der hinteren Fläche des Kopfs (120) befestigt ist; und
einen dritten Reiniger (150) zum Reinigen von oralem Weichgewebe, der an der Umfangsfläche des Kopfs (120) befestigt ist;
**dadurch gekennzeichnet, dass** der erste Reiniger (140) aus einem elastomeren Material mit einer ersten Dichte hergestellt ist, der zweite Reiniger (160) aus einem elastomeren Material mit einer zweiten Dichte hergestellt ist, und der dritte Reiniger (150) aus einem elastomeren Material mit einer dritten Dichte hergestellt ist, wobei die Materialien des ersten Reinigers (140) und des zweiten Reinigers (160) eine unterschiedliche Härte aufweisen.

2. Mundpflegegerät (100) nach Anspruch 1, wobei der erste Reiniger (140) und der zweite Reiniger (160) spritzgegossen sind und ein erster Schuss eines elastomeren Materials sind, und der dritte Reiniger (150) spritzgegossen ist und ein zweiter Schuss eines elastomeren Materials ist.

3. Mundpflegegerät (100) nach Anspruch 1, wobei der erste Reiniger (140) aus einem elastomeren Material hergestellt ist, das mit einem sensorischen Material gefüllt ist, um eine erste trigeminale sensorische Antwort zu verursachen, wobei der zweite Reiniger (160) aus einem elastomeren Material hergestellt ist, das mit einem sensorischen Material gefüllt ist, um eine zweite trigeminale sensorische Antwort zu verursachen, und wobei der dritte Reiniger (150) aus einem elastomeren Material hergestellt ist, das mit einem sensorischen Material gefüllt ist, um eine dritte trigeminale sensorische Antwort zu verursachen.

4. Mundpflegegerät (100) nach Anspruch 3, wobei der erste Reiniger (140) aus einem elastomeren Material mit einem ersten Aromastoff hergestellt ist, wobei der zweite Reiniger (160) aus einem elastomeren Material mit einem zweiten Aromastoff hergestellt ist, und wobei der dritte Reiniger (150) aus einem elastomeren Material mit einem dritten Aromastoff hergestellt ist.

5. Mundpflegegerät (100) nach Anspruch 3, wobei der erste Reiniger (140) aus einem elastomeren Material mit einem ersten Sensat hergestellt ist, wobei der zweite Reiniger (160) aus einem elastomeren Material mit einem zweiten Sensat hergestellt ist, und wobei der dritte Reiniger (150) aus einem elastomeren Material mit einem dritten Sensat hergestellt ist.

6. Mundpflegegerät (100) nach Anspruch 1, des Weiteren umfassend:
den an eine erste Zone des Kopfs (120) befestigten ersten Reiniger (140);
den an eine zweite Zone des Kopfs (120) befestigten zweiten Reiniger (160); und den an eine dritte Zone des Kopfs (120) befestigten dritten Reiniger (150).

7. Mundpflegegerät (100) nach Anspruch 6, wobei der erste Reiniger (140) eine erste Topographie umfasst, die geeignet ist, um orales Weichgewebe zu reinigen, wobei der zweite Reiniger (160) eine zweite Topographie umfasst, die geeignet ist, um orales Weichgewebe zu reinigen, und wobei der dritte Reiniger (150) eine dritte Topographie umfasst, die geeignet ist, um orales Weichgewebe zu reinigen, wobei die erste Topographie eine Vielzahl von vorstehenden Noppen (144) umfasst, wobei die dritte Topographie eine Vielzahl von Vertiefungen (153) umfasst, und die zweite Topographie eine Vielzahl von ring-artigen Wänden (161, 162, 163) umfasst.

8. Mundpflegegerät (100) nach Anspruch 7, wobei die erste Zone eine ringförmige Fläche auf der ersten Oberfläche (122) des Kopfs (120) ist, wobei die ringförmige Fläche eine zentrale Zone umgibt, wobei die dritte Zone ein Streifen (151) ist, der sich entlang der Umfangsfläche (123) des Kopfs (120) erstreckt, und wobei die zweite Zone die zentrale Zone (142) ist.

9. Mundpflegegerät (100) nach Anspruch 1, des Weiteren umfassend eine Vielzahl von Zahnreinigungselementen (130), die sich von der entgegengesetzten Oberfläche des Kopfs erstrecken.

## Revendications

1. Instrument de soin buccal (100) comprenant :
un manche (110) ;
une tête (120) connectée au manche (110), la tête (120) ayant une surface antérieure (121), une surface postérieure (122), et une surface périphérique (123) s'étendant entre les surfaces frontales et arrières;
des éléments de nettoyage (130) s'étendant depuis la surface antérieure de la tête ;
un premier élément nettoyeur (140) pour nettoyer des tissus mous buccaux fixé à la surface postérieure de la tête (120) ;
un deuxième élément nettoyeur (160) pour nettoyer des tissus mous buccaux fixé à la surface postérieure de la tête (120) ; et
un troisième élément nettoyeur (150) pour nettoyer des tissus mous buccaux fixé à la surface périphérique de la tête (120) ;
**caractérisé en ce que** le premier élément nettoyeur (140) est constitué d'un matériau élastomère élastique ayant une première densité, le deuxième élément nettoyeur (160) est constitué d'un matériau élastomère résilient ayant une deuxième densité, et le troisième élément nettoyeur (150) est constitué d'un matériau élastomère élastique ayant une troisième densité, dans lequel le matériau du premier élément nettoyeur (140) et du deuxième élément nettoyeur (160) ont une dureté différente.

2. Instrument de nettoyage pour soin buccal (100) selon la revendication 1, dans lequel le premier élément nettoyeur (140) et le deuxième élément nettoyeur (160) sont moulés par injection et sont une première charge d'injection de matériau élastique et le troisième élément nettoyeur (150) est moulé par injection et est une deuxième charge d'injection de matériau élastique.

3. Instrument de nettoyage pour soin buccal (100) selon la revendication 1, dans lequel le premier élément nettoyeur (140) est constitué d'un matériau élastique imprégné d'un matériau sensoriel pour provoquer une première réponse sensorielle du trijumeau, dans lequel le deuxième élément nettoyeur (160) est constitué d'un matériau élastique imprégné d'un matériau sensoriel pour provoquer une deuxième réponse sensorielle du trijumeau, et dans lequel le troisième élément nettoyeur (150) est constitué d'un matériau élastique imprégné d'un matériau sensoriel pour provoquer une troisième réponse sensorielle du trijumeau.

4. Instrument de nettoyage pour soin buccal (100) selon la revendication 3, dans lequel le premier élément nettoyeur (140) est constitué d'un matériau élastique ayant un premier agent aromatisant, dans lequel le deuxième élément nettoyeur (160) est constitué d'un matériau élastique ayant un deuxième agent aromatisant, et dans lequel le troisième élément nettoyeur (150) est constitué d'un matériau élastique ayant un troisième agent aromatisant.

5. Instrument de nettoyage pour soin buccal (100) selon la revendication 3, dans lequel le premier élément nettoyeur (140) est constitué d'un matériau élastique ayant un premier agent sensoriel, dans lequel le deuxième élément nettoyeur (160) est constitué d'un matériau élastique ayant un deuxième agent sensoriel, et dans lequel le troisième élément nettoyeur (150) est constitué d'un matériau élastique ayant un troisième agent sensoriel.

6. Instrument de soin buccal (100) selon la revendication 1, comprenant en outre :
le premier élément nettoyeur (140) fixé à une première zone de la tête (120) ;
le deuxième élément nettoyeur (160) fixé à une deuxième zone de la tête (120) ; et
le troisième élément nettoyeur (150) fixé à une troisième zone de la tête (120).

7. Instrument de soin buccal (100) selon la revendication 6, dans lequel le premier élément nettoyeur (140) comprend une première topographie conçue pour nettoyer les tissus mous buccaux, dans lequel le deuxième élément nettoyeur (160) comprend une deuxième topographie conçue pour nettoyer les tissus mous buccaux, et dans lequel le troisième élément nettoyeur (150) comprend une troisième topographie conçue pour nettoyer les tissus mous buccaux, dans lequel la première topographie comprend une pluralité de protubérances en îlots (144), dans lequel la troisième topographie comprend une pluralité de rainures (153), et la deuxième topographie comprend une pluralité de parois en forme d'anneau (161, 162, 163).

8. Instrument de soin buccal (100) selon la revendication 7, dans lequel la première zone est une zone annulaire sur la première surface (122) de la tête (120), la zone annulaire entourant une zone centrale, dans lequel la troisième zone est une bande (151) s'étendant le long de la surface périphérique (123) de la tête (120), et dans lequel la deuxième zone est la zone centrale (142).

9. Instrument de soin buccal (100) selon la revendication 1, comprenant en outre une pluralité d'éléments de nettoyage des dents (130) s'étendant à partir de la surface opposée de la tête.
